Europäisches Patentamt

European Patent Office

Office européen des brevets

(19)

(11) Numéro de publication: **0 270 471 B1**

(12) **FASCICULE DE BREVET EUROPEEN**

(45) Date de publication de fascicule du brevet:
18.09.91

(51) Int. Cl.⁵: **H04L 12/56**

(21) Numéro de dépôt: 87460017.4

(22) Date de dépôt: 22.10.87

(54) **Système de commutation de paquets.**

(30) Priorité: 07.11.86 FR 8615800

(43) Date de publication de la demande:
08.06.88 Bulletin 88/23

(45) Mention de la délivrance du brevet:
18.09.91 Bulletin 91/38

(84) Etats contractants désignés:
BE DE ES GB IT NL

(56) Documents cités:
EP-A- 0 113 639
EP-A- 0 143 203
EP-A- 0 183 592

(73) Titulaire: François, Joel
Prat Cottel, St Quay Perros
F-22700 Perros-Guirec(FR)

Titulaire: Quinquis, Jean-Paul
14, rue de Cornic
F-22700 Perros Guirec(FR)

Titulaire: Servel, Michel
Le Rhu en Servel
F-22300 Lannion(FR)

(72) Inventeur: François, Joel
Prat Cottel, St Quay Perros
F-22700 Perros-Guirec(FR)
Inventeur: Quinquis, Jean-Paul
14, rue de Cornic
F-22700 Perros Guirec(FR)
Inventeur: Servel, Michel
Le Rhu en Servel
F-22300 Lannion(FR)

(74) Mandataire: Le Guen, Louis François
CABINET Louis LE GUEN 38, rue Levavasseur
B.P. 91
F-35802 Dinard Cédex(FR)

## Description

La présente invention concerne un système de commutation de paquets comprenant un commutateur de multiplex à haut débit de paquets de longueur fixe synchrones et délivrant directement des sous-multiplex de paquets à plus bas débit.

A titre d'exemple, un multiplex de paquets de longueur fixe synchrones est déjà décrit dans le document EP-A-0 108 028.

Un commutateur de multiplex de paquets de longueur fixe synchrones est aussi déjà décrit dans le document FR-A-2 538 976. Dans cet autocommutateur, les paquets sont considérés comme des intervalles de temps à adressage explicite, ce qui permet d'y utiliser des fonctions existantes dans les commutateurs temporels de circuits à commande par la sortie. La fonction commutation de paquets consiste essentiellement à associer à chaque paquet entrant, identifié par son numéro de multiplex entrant parmi plusieurs et son étiquette, une nouvelle identification elle-même caractérisée par deux attributs de même type, c'est-à-dire une nouvelle étiquette et le numéro du multiplex sortant parmi plusieurs qui va délivrer le paquet. Sous une autre forme, on commute le paquet (e, i), où e est le numéro du multiplex entrant et i l'étiquette, en un paquet sortant (s, j), où s est le numéro du multiplex sortant et j la nouvelle étiquette.

Dans cette commutation de paquets, une première action est entreprise sur le paquet (e, i) avant son rangement dans la mémoire tampon, cette action consistant en une "conversion d'étiquette" qui correspond à une permutation d'intervalle de temps en commutation temporelle de circuits. Cette conversion est effectuée par une mémoire de commande, qui a été programmée lors de l'établissement de la communication par paquets. Ainsi, l'étiquette i est remplacée par l'étiquette j. Le paquet (e, j) est alors rangé dans la mémoire tampon à une adresse connue, fonction de l'instant d'écriture défini par e. Cette adresse est stockée dans une file d'attente associée au multiplex sortant s. Comme le système est commandé par la sortie, au cours du cycle d'exploration des multiplex sortant, la file d'attente associée au multiplex sortant s est explorée pour délivrer l'adresse du prochain paquet que le multiplex sortant s aura a porter. Comme en commutation temporelle de circuits, l'information formant le paquet est rangée dans la mémoire tampon.

Plus particulièrement, dans cet autocommutateur, la mise en parallèle de chaque paquet complet est effectuée avant l'écriture en mémoire tampon. Les paquets entrants ont d'abord leurs octets convertis en parallèle, puis transitent dans des mémoires servant de files d'attente qui sont réalisées au moyen de mémoires FiFo ou "premier entré -premier sorti".

Toujours dans cet autocommutateur, la conversion classique série-parallèle des files d'octets parallèles est remplacée par une succession de permutations simultanées d'octets parallèles pour l'ensemble des multiplex entrants et une autre succession de permutations simultanées d'octets parallèles pour l'ensemble des multiplex sortants. La logique de commande, qui comprend la seule mémoire de commande, n'étant capable d'analyser qu'une seule étiquette par temps d'octet, il est prévu que les étiquettes des différents paquets s'enchaînent de manière temporellement décalée. Ceci est obtenu en assurant dans les files d'attente d'entrée un déphasage temporel de 1 octet d'une file à la suivante. Une matrice de rotation permet d'effectuer une rotation commandable sur des groupes de n octets. L'ordre de la rotation progresse d'un pas à chaque "temps d'octet". En sortie de la matrice de rotation, les informations se présentent sous une forme dite "parallèle-diagonale". Les informations sont rangées sous cette forme dans la mémoire tampon. Le convertisseur parallèle-série est lui-même formé d'une matrice de rotation à commande cyclique effectuant les décalages dans le sens inverse de la matrice d'entrée.

Dans des exemples de réalisation du commutateur de paquets mentionné ci-dessus, on a, plus particulièrement, considéré le cas où le nombre d'octets par paquet, c'est-à-dire par intervalle de temps, est égal à une puissance de 2 et, encore plus particulièrement, un nombre d'octets par paquet égal à seize. Chaque paquet de ce type est constitué d'un en-tête, occupant un octet, suivi de quinze octets d'information. Dans le système, suivant l'invention, qui sera décrit à titre d'exemple, on considérera aussi que chaque paquet comprend seize octets. Toutefois, comme il est décrit dans la demande de brevet français n° 85 19453 déposée le 27 décembre 1985 et intitulée "Système de commutation de multiplex de paquets", le commutateur mentionné ci-dessus peut être adapté pour commuter des paquets comprenant un octet d'entête plus seize octets d'information, et le système de l'invention conviendrait aussi dans ce cas. D'autres capacités de paquet pourraient également être envisagées.

Par ailleurs, toujours dans le document FR-A-2 538 976, on a décrit, notamment en relation avec les Figs. 11 et 12, un exemple de réalisation de commutateur de paquet précédé d'un concentrateur.

Un objet de la présente invention consiste à prévoir un commutateur de paquets du type de celui qui a été mentionné ci-dessus, mais qui, de plus, permet une déconcentration.

La fonction de commutation avec déconcentration peut avoir une très grande importance sur le plan pratique. En effet, fondamentalement le commutateur de paquets mentionné ci-dessus a une capacité énorme de commutation. Ainsi, les multiplex entrants ou sortants peuvent avoir des débits de 220 Mbit/s, ce qui rend le commutateur facilement utilisable dans un réseau de vidéocommunications. Cependant, il est intéressant de tirer profit de cette grande capacité de commutation dans un réseau qui comprend des circuits asynchrones à bas débit, mais en grand nombre. Comme on l'a déjà mentionné, on sait concentrer ces trafics et il était important de pouvoir, à partir d'un commutateur de grande capacité, pouvoir déconcentrer les multiplex à grand débit sur des sous-multiplex à bas débit. C'est précisément l'object de l'invention.

Un autre objet de l'invention consiste à prévoir un commutateur capable de délivrer des sous-multiplex dont le débit est un sous-multiple du débit des multiplex entrants.

Un autre objet de l'invention consiste à prévoir un commutateur capable de délivrer des sous-multiplex dont les débits sont respectivement déterminés par des rythmes fournis par les unités terminales auxquelles ils sont reliés.

Suivant une caractéristique de l'invention, il est prévu un système de commutation de multiplex à intervalles de temps contenant des paquets de longueur fixe provenant d'une pluralité de n jonctions entrantes vers une pluralité de jonctions sortantes ayant des débits inférieurs aux débits des jonctions entrantes, chaque paquet entrant comportant un en-tête, le système comprenant:

- des premiers moyens de conversion transformant les paquets série d'une pluralité de multiplex entrants, en paquets parallèles,
- des moyens pour transmettre, aux entrées d'adresse d'une mémoire de commande, programmable à accès aléatoire, l'en-tête et l'identification de la jonction entrante d'origine de chaque paquet entrant, la sortie de données de ladite mémoire de commande délivrant un nouvel en-tête traduit affecté au paquet entrant parallèle en substitution de l'en-tête d'origine de manière à former, avec les mots restants du paquet entrant, le paquet parallèle sortant,
- une mémoire tampon activée cycliquement en écriture, pour mémoriser les paquets sortants,
- des seconds moyens de conversion transformant chaque paquet parallèle sortant, lu dans la mémoire tampon, en un paquet série affecté au(x) multiplex destinataire(s),
- les jonctions sortantes étant groupées en n groupes de jonctions sortantes et chaque groupe comprenant au plus p jonctions sortantes,

- une pluralité de moyens pour mémoriser les adresses des paquets qui sont présents dans la mémoire tampon, lesdits moyens étant validés sélectivement en écriture, en fonction d'une information fournie également par d'autres sorties de données de la mémoire de commande, chacun des moyens de mémorisation étant affecté de manière univoque à une jonction sortante, lesdits moyens de mémorisation étant groupés en groupes de la même manière que les jonctions sortantes,
- des moyens sensibles à un signal indiquant l'activation d'une quelconque des jonctions sortantes pour lire l'adresse contenue dans le moyen de mémorisation correspondant, de manière à retrouver, dans la mémoire tampon, le paquet sortant destiné à ladite jonction, et
- un circuit d'activation et de validation comportant des moyens pour sélecter successivement et cycliquement chaque groupe de jonctions sortantes et, à chaque sélection, activer dans le groupe sélecté une jonction sortante, et, en série sur chaque jonction sortante, une file tampon capable de mémoriser un paquet entier.

Suivant une autre caractéristique de l'invention, le système comporte des moyens pour, à chaque sélection, dans chaque groupe sélecté, activer successivement et cycliquement les jonctions sortantes.

Suivant une autre caractéristique, le système comprend des moyens pour, à chaque sélection, dans chaque groupe, activer une parmi les jonctions sortantes requérant la réception d'un paquet.

Les caractéristiques mentionnées cidessus, ainsi que d'autres, apparaîtront plus clairement à la lecture de la description suivante d'exemples de réalisation, ladite description étant faite en relation avec les dessins joints, parmi lesquels:

la Fig. 1 est un bloc-diagramme d'un système de commutation suivant l'invention,

la Fig. 2 est un bloc-diagramme montrant la mémoire de paquets du système de commutation de la Fig. 1,

la Fig. 3 est le schéma de la base de temps du système de la Fig. 1,

la Fig. 4 montre différents diagrammes temporels illustrant le fonctionnement de la base de temps de la Fig. 3,

la Fig. 5 est le schéma d'un premier exemple de circuit d'aiguillage et de validation utilisé dans le système de la Fig. 1,

la Fig. 6 montre des diagrammes temporels illustrant le fonctionnement du circuit de la Fig. 5,

les Figs. 7 et 8 sont les schémas de circuits formant un second exemple de circuit d'aiguillage et de validation utilisable dans le système de la Fig. 1,

la Fig. 9 montre des diagrammes temporels illustrant le fonctionnement du circuit de la Fig. 8, et

la Fig. 10 montre des diagrammes temporels illustrant le fonctionnement de l'un des circuits de la Fig. 7.

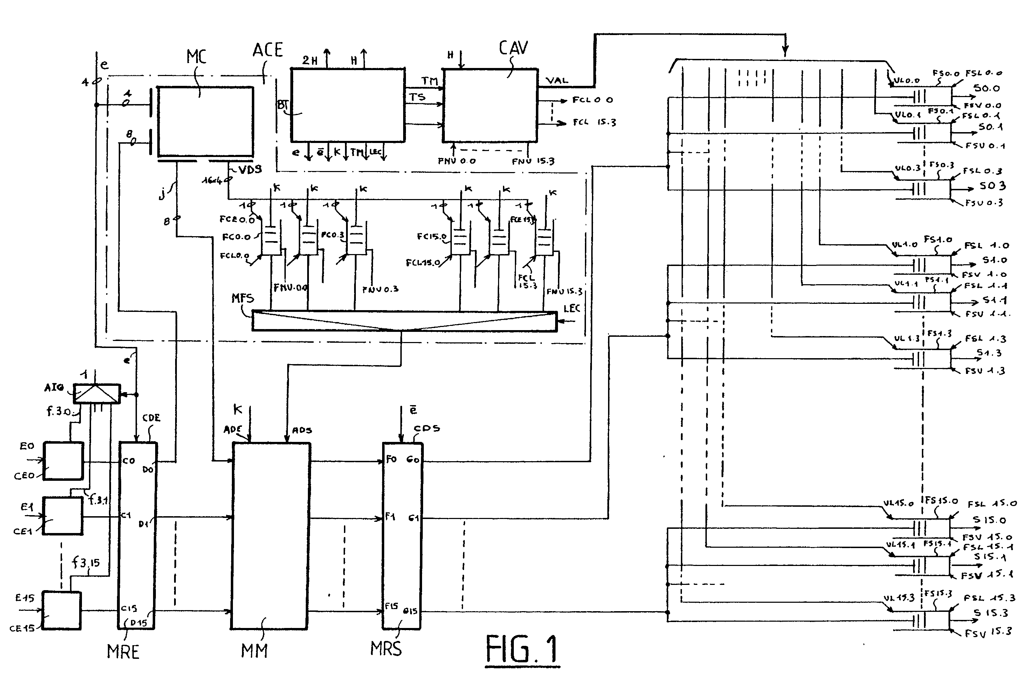

Le bloc-diagramme de la Fig. 1 montre un exemple de réalisation d'un système de commutation de paquets suivant l'invention. Ce système contient un commutateur de paquets du type de celui qui est décrit dans le brevet français FR-A-2 538 976, mais dont certaines parties ont été modifiées et d'autres parties ajoutées pour obtenir le résultat attendu du système de l'invention.

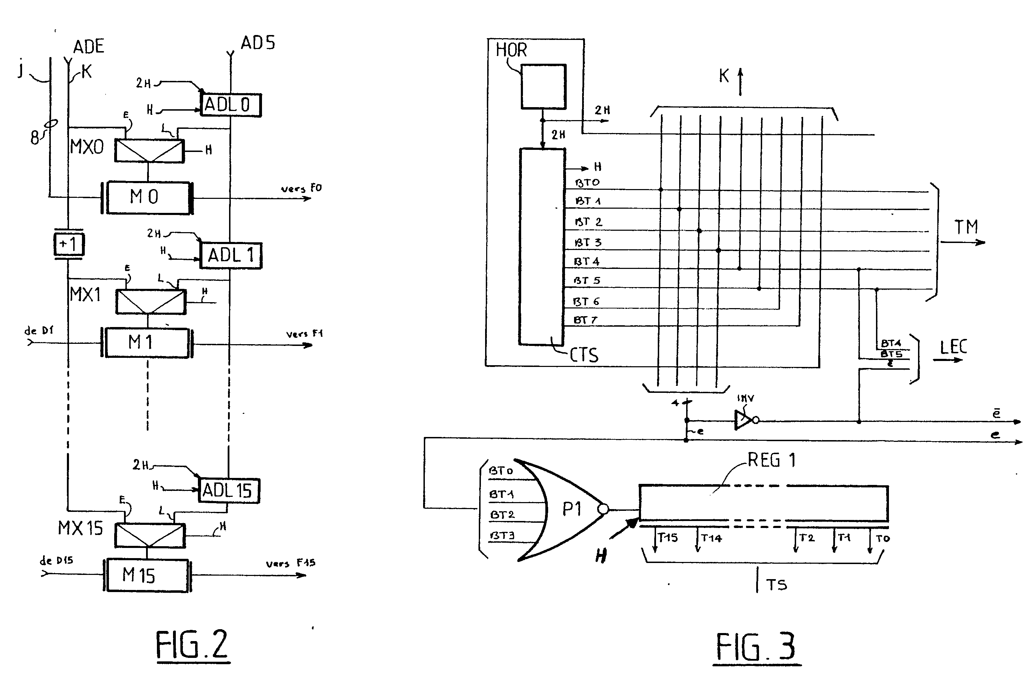

A la Fig. 1, les paquets arrivent sur les canaux E0 à E15 et sont à commuter pour être transmis sur des voies S0.0, S0.1, S0.2, S0.3, S1.0, S1.1, ..., S1.3, S2.0, ..., S15.2, S15.3. Chaque canal d'entrée E0 à E15 transmet un train binaire formant un multiplex de paquets de longueur fixe synchrones du type qui est décrit dans le document EP-A-0 108 028 et est relié à l'entrée d'un circuit d'entrée CE0 à CE15. Chaque circuit d'entrée CE0 à CE15 se compose d'un convertisseur série-parallèle fonctionnant octet par octet et d'une file d'attente organisés comme le circuit d'entrée montré à la Fig. 2 du document FR-A-2 538 976. On ne donnera donc pas, dans la suite, plus de détail sur ces circuits d'entrée.

Chaque voie de sortie S0.0 à S15.3 transmet un train binaire formant un sous-multiplex de paquets de longueur fixe, dont le débit est inférieur à celui des multiplex d'entrée, ce qui explique qu'ils sont appelés sous-multiplex.

Comme les canaux E0 à E15 sont reliés à des points d'origine différents, à priori non synchronisés, les étiquettes des paquets qu'ils transportent entrent à des temps d'octets différents dans les files d'attente des circuits d'entrée CE0 à CE15. Donc, initialement, les étiquettes des paquets n'ont aucune raison d'être lues dans un ordre prédéterminé aux sorties de ces files.

L'ensemble des files des circuits CE0 à CE15 sert donc à "aligner" les multiplex. Chaque file doit avoir une taille supérieure à seize mots de neuf bits, puisque l'on considère des paquets de seize mots de huit bits et que, dans la file, un bit est réservé pour indiquer le début d'un paquet. En pratique, les circuits CE0 à CE15 constituent des moyens de décalage dans le temps des multiplex entrants E0 à E15, de façon à ce que les en-têtes des différents multiplex sortant des circuits CE0 à CE15 soient délivrés séquentiellement, suivant un alignement diagonal.

En pratique, l'alignement diagonal des lectures dans les files est obtenu en utilisant des signaux de référence externes délivrés sur les fils f3.0 à f3.15 à partir d'un circuit d'aiguillage AIG. En ce qui concerne l'action de chaque signal de référence externe sur la file du circuit d'entrée correspondant, on se reportera à la Fig. 2 du document FR-A-2 538 976 et au texte qui l'a décrite. On retiendra que chaque sortie f3.0 à f3.15 impose le moment de lecture du premier octet de paquet dans la file correspondante, c'est-à-dire le moment de lecture de l'étiquette de chaque paquet entrant.

Le commutateur de paquets comprend encore une base de temps BT, un circuit d'aiguillage et de conversion d'étiquette ACE, une matrice de rotation d'entrée MRE, une mémoire tampon MM, une matrice de rotation de sortie MRS, des files de sorties FS0.0 à FS15.3, suivies chacune d'un convertisseur parallèle/série, non montré, et un circuit d'adressage de lecture et de validation CAV.

La base de temps BT, dont le schéma est montré à la Fig. 3, comprend une source HOR de signal d'horloge de fréquence 2H, étant entendu que 1/H représente un temps d'octet pour chacun des multiplex entrants, un compteur binaire CTS est un registre à décalage REG1. L'entrée du compteur binaire CTS et réliée à la sortie de la source HOR, sa première sortie délivre un signal à la fréquence octet H. Parmi les huit sorties suivantes BT0 à BT7, le groupe de sorties BT0 à BT3 forme ce qu'il est convenu d'appeler une liaison e tandis que l'ensemble des sorties BT0 à BT7 forme ce qu'il est convenu d'appeler une liaison K. Des inverseurs INV permettent d'obtenir une liaison e à partir de la liaison e. On verra dans la suite le rôle joué par le registre REG1.

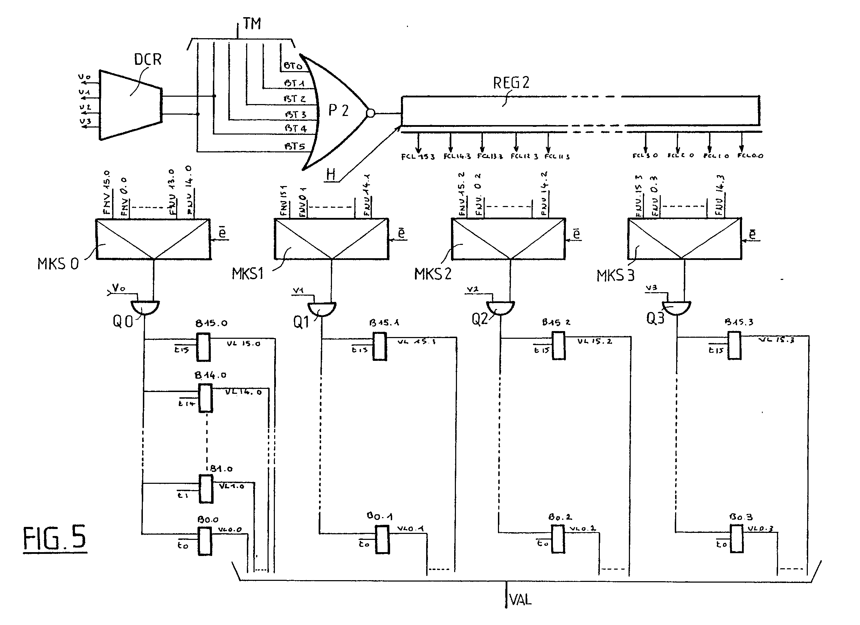

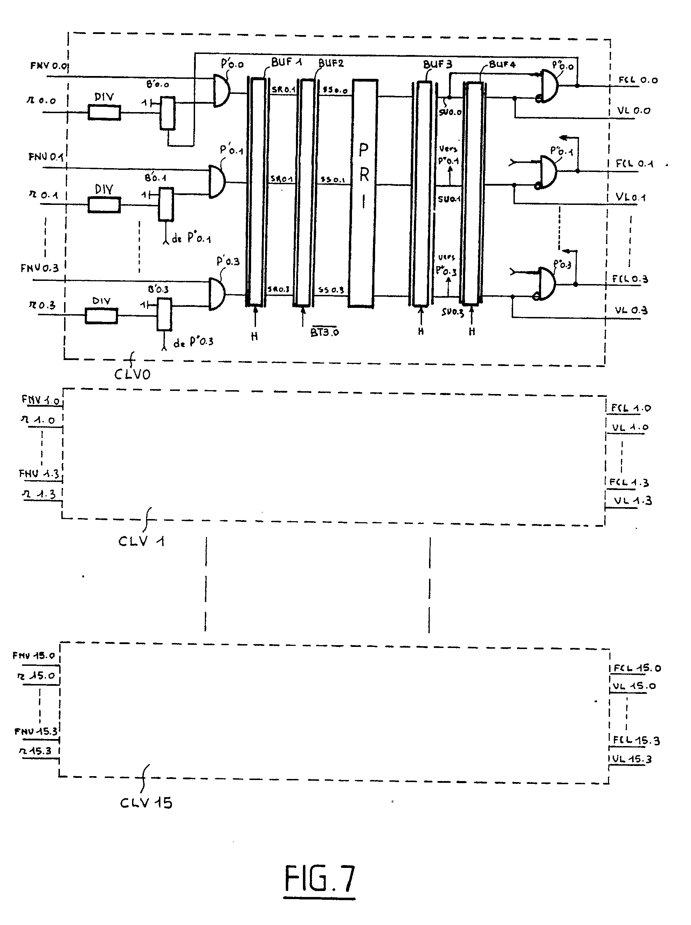

On verra aussi dans la suite que, pour le circuit d'adressage et de validation CAV, deux exemples de réalisation, respectivement montrés aux Figs. 5 et 7, sont prévus lesquels correspondent à deux modes de fonctionnement du système de commutation de l'invention.

Les sorties de données des circuits CE0 à CE15 sont respectivement reliées aux entrées C0 à C15 de la matrice de rotation d'entrée MRE. La matrice de rotation d'entrée MRE, comme la matrice de rotation de sortie MRS, peut être constituée par des circuits connus en terminologie anglo-saxonne sous les noms de "Rotate matrix" ou "Shift matrix" commercialisées en technologie ECL 100K sous le n° F 100158 par la société Fairchild. Ces matrices peuvent être réalisées avec une commande associée aux entrées ou associée aux sorties. Dans le document FR-A-2 238 976, les matrices sont du type commandé par l'entrée. Dans le présent exemple de réalisation, la matrice d'entrée est du type à commande associée aux entrées, ce qui explique que, pour une suite d'adresses croissant régulièrement, une sortie de données se trouve reliée successivement aux entrées, pour chaque entrée l'indice étant celui de l'adresse croissante. Les sorties D1 à D15 de la matrice MRE sont respectivement reliées aux entrées correspondantes de la mémoire tampon MM.

La sortie D0 à huit fils de la matrice de rotation d'entrée MRE est reliée, par l'intermédiaire d'un registre tampon d'entrée, non montré, aux huit premières entrées d'adresse d'une mémoire à accès aléatoire MC située dans le circuit d'aiguillage et de conversion d'étiquette ACE.

Le faisceau e à quatre fils, sortant du compteur CTS de la base de temps BT, transmet quatre bits BT0 à BT3 et est relié à l'entrée de commande de l'aiguilleur AIG comportant les seize sorties f3.0 à f3.15. La rotation du compteur CTS se traduit par la circulation, à la fréquence H, d'un "1" sur les sorties f3.0 à f3.15. Les signaux successifs appliqués aux fils f3.0 à f3.15 en fonction de la sortie du compteur CTS font que les activations en lecture des circuits d'entrée CE0 à CE15 sont séquentielles.

Quatre secondes entrées d'adresse de la mémoire MC sont également reliées au faisceau e. Le faisceau e est encore relié à l'entrée de commande CDE assurant les décalages dans la matrice de rotation d'entrée MRE. Enfin, un faisceau K est reliée à l'entrée d'adresse d'écriture ADE de la mémoire tampon MM.

La mémoire MC comporte un premier groupe de sorties d'étiquette j sur huit fils et un second groupe de sorties VDS sur 64 fils (soit 16x4 fils). La sortie j est reliée à l'entrée correspondante de la mémoire tampon MM, comme on le verra mieux à la Fig. 2. Les sorties VDS, qui identifient les voies de sortie, sont reliées individuellement aux entrées de commande d'écritures de 64 files de mémoire d'adresses de lecture FC0.0, FC0.1, ..., FC15.3, qui font partie du circuit d'aiguillage et de conversion d'étiquette ACE. Chaque file FC0.0 à FC15.3 correspond à une voie de sortie S0.0 à S15.3 du système de commutation. Chaque file FCx.y comporte une entrée de commande d'écriture FCEx.y, une entrée de commande de lecture FCLx,y, une entrée de données reliée au faisceau K, une sortie de données reliée à une entrée correspondante d'un multiplexeur MFS et un fil FNVx.y qui, quand il est à l'état "1", indique que la file FCx.y n'est pas vide. L'entrée de commande du multiplexeur MFS est reliée au circuit BT par la liaison LEC qui sera décrite dans la suite.

Le bloc-diagramme de la Fig. 2 montre la structure de la mémoire tampon MM qui est la même que celle de la mémoire du commutateur décrit dans le brevet FR-A-2 538 976 et qui n'est rappelé ici que pour mémoire. Comme le montre la Fig. 2, la mémoire MM se compose de seize mémoires tampons M0 à M15. L'entrée de données de la mémoire M0, destinée à enregistrer les étiquettes des paquets sortants, est reliée à la sortie j de la mémoire MC et les entrées de données des mémoires M1 à M15, destinées à enregistrer les champs de données des paquets, sont respectivement reliées aux sorties D1 à D15 de la matrice MRE. Les sorties des mémoires M0 à M15 sont respectivement reliées aux entrées F0 à F15 de la matrice de rotation de sortie MRS.

La sortie G0 de la matrice MRS est reliée, en parallèle, aux entrées de données de quatre files de sortie FS0.0 à FS0.3 dont les sorties sont respectivement reliées aux quatre voies S0.0 à S0.3. De même, la sortie G1 de la matrice MRS est reliée, en parallèle, aux entrées de données de quatre files FS1.0 à FS1.3 dont les sorties sont respectivement reliées aux sorties S1.0 à S1.3, et ainsi de suite jusqu'à la sortie G15 qui est reliée, en parallèle, à quatre files FS15.0 à FS15.3. Les entrées respectives de validation d'écriture VL0.0, VL0.1, ..., VL15.3 des files FS0.0, FS0.1, ..., FS15.3 sont reliées par une liaison VAL au circuit CAV. Chaque file FSx.y comporte également un fil FSVx.y indiquant qu'elle est vide et une entrée de commande de lecture FSLx.y.

L'entrée de commande de décalage CDS de la matrice MRS reçoit l'information de la liaison

$$\bar{e}.$$

Comme on l'a mentionné plus haut, les sorties de données des files d'adresses FC0.0, FC0.1 à FC15.3 sont reliées par soixante-quatre liaisons LC0.0, LC0.1, ..., LC15.3, à huit fils chacune, aux entrées correspondantes du multiplexeur MFS dont l'entrée de commande est reliée par la liaison LEC au circuit BT.

La sortie à huit fils du multiplexeur MFS est reliée, par l'entrée ADS de la mémoire MM, à l'entrée d'un compteur-registre ADL0, Fig. 2. La sortie à huit fils du compteur-registre ADL0 est reliée, d'une part, à l'entrée L du multiplexeur MX0 et, d'autre part, à l'entrée d'un compteur-registre ADL1. La sortie à huit fils du compteur-registre ADL1 est reliée, d'une part, à l'entrée L du multiplexeur MX1 et, d'autre part, à l'entrée d'un compteur-registre suivant ADL2, et ainsi de suite jusqu'à un compteur-registre ADL15.

Les compteurs-registres ADL0 à ADL15 ont chacun leur entrée de sélection de fonction comptage ou chargement reliée à la sortie d'horloge H et leur entrée d'activation de la fonction sélectionnée reliée à la sortie d'horloge 2H.

Les sorties à huit fils des multiplexeurs MX0 à MX15 sont respectivement reliées aux entrées d'adresse des mémoires M0 à M15. Les entrées de commande écriture-lecture E/L des multiplexeurs MX0 à MX15 sont reliées à la sortie d'horloge H, permettant de choisir entre le groupe associé à l'entrée E, porteur des adresses d'écriture, et le groupe associé à l'entrée L, porteur des adresses de lecture.

On va maintenant décrire, en se référant aux Figs. 1 et 2, comment les paquets entrants sont rangés dans la mémoire MM du système de commutation, sachant que le rôle de chacun des circuits d'entrée CE0 à CE15 a déjà été décrit.

Les adresses de rotation de la matrice de rotation d'entrée MRE sont déterminés par le faisceau e et permettent les écritures des mots du champ de données de chaque paquet. Une fois décalées, les sorties D1 à D15 vont respectivement délivrer les mots 1 à 15 des paquets suivant une configuration oblique déjà décrite dans le document EP-A-0 113 639. Ainsi, la sortie D1 applique à la mémoire M1 tous les mots 1, la sortie D2 applique à la mémoire M2 tous les mots 2, etc. Les mémoires M1 à M15, prévues pour enregistrer 16x16 champs de paquet sont adressées sur huit fils.

Par ailleurs, la sortie D0 transmet l'étiquette i du paquet entrant à la mémoire MC qui reçoit également par la liaison e le rang de la jonction d'entrée concernée.

La mémoire MC, adressée par e et i, délivre la nouvelle étiquette j et l'identification d'une ou de plusieurs jonctions de sortie adéquates parmi les voies de sortie S0.0 à S15.3. Au même instant, le compteur CTS délivre, par la liaison K, Fig. 3, un nombre parmi $2^8$, qui représente l'adresse Adi à laquelle l'étiquette j doit être écrite dans la mémoire M0. Egalement, au même instant, cette adresse Adi est introduite dans chaque file FC0.0 à FC15.3 qui est désignée par la valeur s de la sortie correspondante de la mémoire MC. Encore, au même instant, l'étiquette j est écrite dans la mémoire M0.

Par ailleurs, la liaison K est également reliée à l'entrée E du multiplexeur MX1 servant à adresser la mémoire M1, c'est-à-dire l'adresse à laquelle le premier mot du paquet suivant une étiquette doit être écrit dans la mémoire M1. Le rôle de l'additionneur +1 a déjà été décrit antérieurement dans le brevet FR-A-2 538 976. Il ne sert qu'à compenser le temps de traitement de l'étiquette. Les octets 2 à 15 du paquet de nouvelle étiquette j sont ensuite successivement écrits dans les mémoires correspondantes M2 à M15, la configuration oblique déjà mentionnée étant respectée.

Il faut noter que les mémoires M0 à M15 sont prévues pour enregistrer 16x16 paquets ce qui explique leur adressage sur huit fils.

Dans la base de temps BT, montrée à la Fig. 3, les sorties BT0 à BT3 du compteur binaire CTS sont reliées aux entrées correspondantes d'une porte NI P1 dont la sortie est reliée à l'entrée de signal du registre à décalage REG1 dont l'entrée d'horloge reçoit le signal H. Le registre REG1 a seize cellules dont les signaux de sortie respectifs T15, T14, ..., T1 et T0 déterminent des temps qui sont respectivement associés aux sorties de la matrice de rotation de sortie MRS. Les sorties BT0 à BT5 sont réunies dans une liaison TM reliée au circuit CAV. Les sorties t15 à t0 sont réunies dans une liaison TS reliée également au circuit CAV.

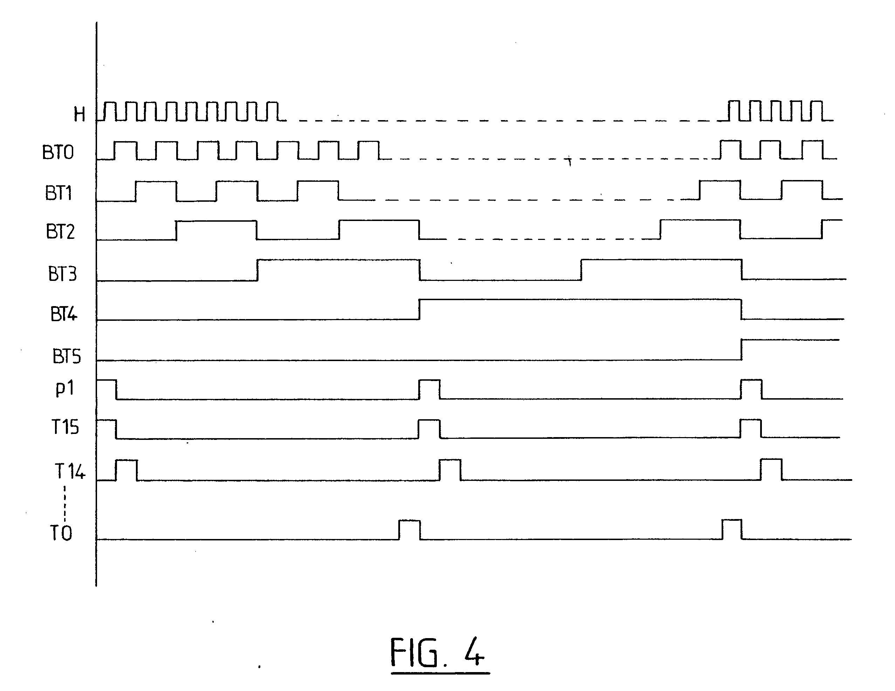

Les diagrammes temporels de la Fig. 4 montrent des signaux de sortie du compteur CTS, c'est-à-dire les signaux H et BT0 à BT5. Toujours à la Fig. 4, un signal p1 représente le signal de sortie de la porte P1 et les signaux T15, T14, ..., T0 correspondent aux sorties respectives du registre REG1.

La Fig. 5 montre le schéma d'un premier exemple de réalisation du circuit CAV. Il comprend une porte NI P2 dont les entrées sont reliées à la liaison TM pour recevoir les signaux BT0 à BT5 et dont la sortie est reliée à l'entrée de signal d'un registre à décalage REG2 dont l'entrée d'horloge reçoit le signal H à la fréquence octet. Le registre REG2 a soixante-quatre cellules dont les signaux de sorties respectifs FCL15.3, FCL14.3, FCL13.3, ..., FCL0.3, FCL15.2, FCL14.2, ..., FCL0.2, ..., FCL2.0, FCL1.0 et FCL0.0 déterminent des temps respectivement associés aux sorties du système de commutation.

Le circuit CAV comprend aussi un décodeur DCR qui a deux entrées recevant respectivement les signaux binaires BT4 et BT5, et qui convertit ces deux signaux en quatre signaux individuels V0, V1, V2 et V3. Les signaux V0 à V3 ont chacun une durée de seize périodes du signal H. Ils se suivent les uns les autres pour occuper soixante-quatre périodes par cycle du signal BT5.

Le circuit CAV comprend encore quatre multiplexeurs MKS0 à MKS3, à seize entrées chacun, dont les entrées de commande sont reliées à la liaison

$$\bar{e}.$$

Le multiplexeur MKS0 a ses entrées reliées aux fils indicateurs d'état non vide FNV15.0, FNV0.0, ..., FNV14.0 des files de commande de lecture FC15.0, FC0.0, ..., FC14.0. De même, les entrées du multiplexeur MKS1 sont reliées aux fils indicateurs d'état non vide FNV15.1, FNV0.1, ..., FNV14.1 des files de commande FC15.1, FC0.1, ..., FC14.1, et ainsi de suite. La raison pour laquelle le fil FNV15.y est placé devant le fil FNV0.y dans chaque multiplexeur MKSy tient à ce qu'il faut tenir compte du délai de traitement dans la matrice MRS.

Les sorties de multiplexeurs MKS0 à MKS3 sont respectivement reliées aux premières entrées de quatre portes ET Q0 à Q3 dont les secondes entrées reçoivent respectivement les signaux V0 à V3.

La sortie de la porte Q0 est reliée, en parallèle, aux entrées de signal de seize bascules B15.0, B14.0, ..., B0.0 dont les entrées d'horloge reçoivent respectivement les signaux T15 à T0 délivrés par le registre REG1. Les sorties Q des bascules B15.0 à B0.0 délivrent respectivement des signaux VL15.0 à VL0.0 qui sont respectivement appliqués aux entrées d'écriture des files de sortie FS15.0 à FS0.0. De même, la sortie de la porte Q1 est reliée, en parallèle, aux entrées de signal de seize bascules B15.1 à B0.1 dont les entrées d'horloge reçoivent respectivement les signaux T15 à T0. Les sorties Q des bascules B15.1 à B0.1 délivrent les signaux VL15.1 à VL0.1 appliqués aux entrées d'écriture des files de sortie FS15.1 à FS0.1, et ainsi de suite. L'ensemble des sorties des bascules forme la liaison VAL.

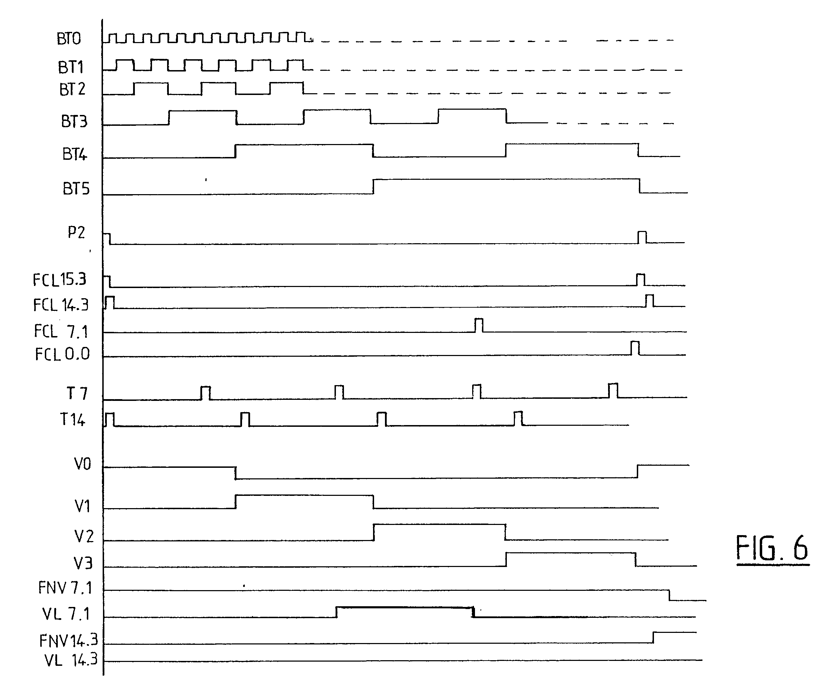

Les diagrammes temporels de la Fig. 6 montrent les signaux BT0 à BT5, ainsi que le signal de sortie p2 de la porte P2 et les signaux de sorties FCL15.3, FCL14.3, ..., FCL7.1, ..., FCL0.0. Par ailleurs, on a encore montré, à la Fig. 6, les signaux T7 et T14 de la liaison TS et les signaux V0, V1, V2 et V3 de sortie du décodeur DCR. De plus, on a montré un signal FNV7.1 à "1" montrant que la file de commande FC7.1 n'est pas vide et un signal FNV14.3 à "0" indiquant que la file FC14.3 est vide. Enfin, on a montré les signaux de lecture VL7.1 et VL14.3 des files de sorties FS7.1 et FS14.3. Il apparaît que, pendant le cycle de BT5 montré, la file FS7.1 va recevoir un paquet de la mémoire MM tandis que la file FS14.3 ne recevra aucun paquet.

En se référant de nouveau à la Fig. 1, il apparaît qu'en utilisant le circuit CAV de la Fig. 5, chaque file de commande FC0.0 à FC15.3 a son fil de lecture activé une fois par cycle du signal BT5. Si la file de commande FCx.y lue n'est pas vide, son fil FNVx,y est à "1" et la plus vieille adresse ADi est transmise par le multiplexeur MFS au registre ADL0 de la mémoire MM ce qui provoque, dans cette dernière, la lecture du paquet destiné à sortir de la matrice CDS par la sortie Gx. Par ailleurs, dans le circuit CAV de la Fig. 5, l'entrée FNVx,y du multiplexeur MKSy est à "1" et la porte Qy est passant pendant le temps Vy. La bascule Bx,y est donc mise à "1" au temps tx et reste dans cet état jusqu'au temps tx suivant où elle passe à l'état "0" car, à cet instant, la porte Qy n'est plus passante. Il en résulte que pendant un quart de cycle de BT5 la file FSx.y a son entrée de lecture VLx.y activée pour recevoir le paquet sortant de la sortie Gx.

Si la file FCx.y est trouvée vide, aucun paquet n'est lu dans la mémoire MM. Les files de sortie FSx.y comportent chacune une entrée de commande de lecture qui permettent d'y lire les paquets à un rythme égal au quart de celui des paquets entrants. Si, à un moment donné, une file FSx.y est trouvée vide, un circuit auxiliaire, non montré, peut être activé pour transmettre un paquet vide à la voie de sortie Sx.y correspondante.

La Fig. 7 montre le schéma d'un second exemple de réalisation d'un circuit d'aiguillage et de validation CAV. Le circuit de la Fig. 7 est formé de seize circuits de lecture et de validation CLV0 à CL15 qui sont respectivement associés aux sorties G0 à G15 de la matrice de rotation de sortie CDS. Seul le circuit CLV0 a été représenté en détail, les autres circuits CLV1 à CLV15 étant identiques.

Le circuit CLV0 comporte un première série d'entrées r0.0, r0.1, ..., r0.3 et une seconde série d'entrées FNV0.0, FNV0.1, ..., FNV0.3. Les entrées r0.0, r0.1, ..., r0.3 transmettent respectivement les rythmes de lecture mot des files de sortie FS0.0, FS0.1, ..., FS0.3. Ces rythmes peuvent avoir des phases et des fréquences différentes dans un certain domaine fini. Les entrées FNV0.0, FNV0.1, ..., FNV0.3 sont les fils de sortie qui indiquent respectivement que les files FC0.0, FC0.1, ..., FC0.15 ne sont pas vides.

L'entrée r0.0 est reliée à un diviseur par seize DIV dont la sortie de débordement est reliée à l'entrée d'horloge d'une bascule B'0.0 dont l'entrée D est à "1". La sortie Q de la bascule B'0.0 est reliée à la première entrée d'une porte ET P'0.0 La seconde entrée de la porte P'0.0 est reliée à l'entrée FNV0.0 et sa sortie est reliée à l'entrée correspondante d'un registre BUF1. Les entrées r0.1 et FNV0.1 sont, de la même façon, associées dans un circuit comprenant un diviseur par seize DIV, une bascule B'0.1 et une porte ET P'0.1, et ainsi de suite.

Le registre BUF1 comprend quatre cellules dont les entrées sont respectivement reliées aux sorties des portes P'0.0 à P'0.3 et dont les sorties délivrent les quatre signaux SR0.0 à SR0.3. En pratique, l'entrée d'horloge du registre tampon BUF1 reçoit le signal H, si bien que les signaux SR0.0 à SR0.3 sont synchronisés sur ce signal H.

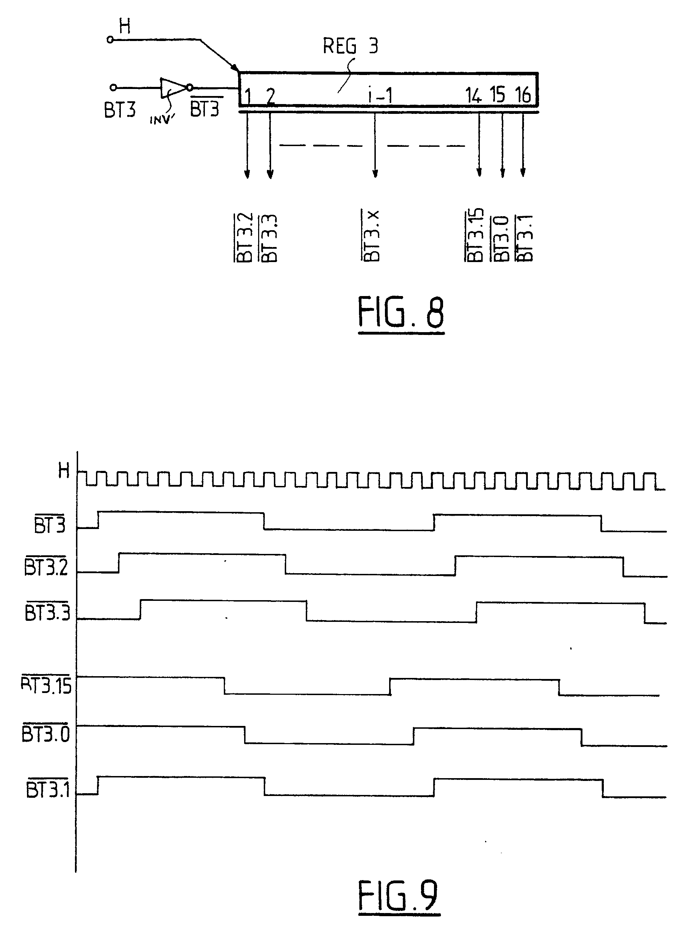

Les signaux SR0.0 à SR0.3 sont appliqués d'un second registre BUF2 à quatre cellules dont l'entrée d'horloge reçoit un signal $\overline{BT3.0}$, qui est engendré par un circuit montré à la Fig. 8. Le registre BUF2 délivre quatre signaux SS0.0 à SS0.3 qui sont synchronisés sur le signal $\overline{BT3.0}$.

Les quatre signaux SS0.0 à SS0.3 sont appliqués à un circuit de décision prioritaire PRI qui, en fonction d'un critère prédéterminé, choisit de faire traiter en priorité l'un de ces quatre signaux, laissant les trois autres en attente. Un tel circuit de décision PRI peut être réalisé au moyen de composants du commerce tel qu'un circuit n° F 100170

suivi d'un circuit n° F 100165, tous deux commercialisés par la société Fairchild. Il existe des exemples de critère de choix de priorité, tels que la priorité tournante, qui sont bien connus de l'homme de métier.

Le circuit PRI à quatre sorties qui sont respectivement reliées aux quatre entrées d'un troisième registre BUF3 dont l'entrée d'horloge reçoit le signal H, ce qui assure une bonne synchronisation sur le signal H. Le registre BUF3 délivre quatre signaux SU0.0 à SU0.3 qui sont appliqués aux quatre entrées d'un quatrième registre BUF4 encore synchronisé sur le signal H. Le registre BUF4 délivre quatre signaux VL0.0 à VL0.3 qui sont respectivement décalés d'une période de H par rapport aux signaux SU0.0 à SU0.3. Les signaux VL0.0 à VL0.3 sont, d'une part, respectivement appliqués aux entrées de commande d'écriture des files de sortie FS0.0 à FS0.3 et, d'autre part, aux premières entrées de quatre portes ET P''0.0 à P''0.3.

Les secondes entrées inverseuses des portes P''0.0 à P''0.3 reçoivent respectivement les signaux SU0.0 à SU0.3 et leurs sorties délivrent les signaux FCL0.0 à FCL0.3, c'est-à-dire les signaux de commande de lecture des files de commande FC0.0 à FC0.3.

Les sorties des portes P''0.0 à P''0.3 sont également reliées aux entrées de remise à zéro des bascules B'0.0 à B'0.3.

Le circuit de la Fig. 8 fait partie du circuit d'aiguillage et de validation CAV suivant le second exemple de réalisation. Il comprend un registre REG3 dont l'entrée de données est reliée à la sortie d'un inverseur INV' dont l'entrée reçoit le signal BT3 fourni par la base de temps BT. L'entrée d'horloge du registre REG3 reçoit le signal H. Le registre REG3 comprend seize étages, la sortie du premier étage fournissant le signal $\overline{BT3.2}$, le second le signal $\overline{BT3.3}$, ..., le 14e le signal $\overline{BT3.15}$, le 15e le signal $\overline{BT3.0}$ et le 16e le signal $\overline{BT3.1}$.

Les diagrammes de la Fig. 9 montrent les signaux H et BT3, ainsi que les signaux $\overline{BT3.0}$ à $\overline{BT3.15}$.

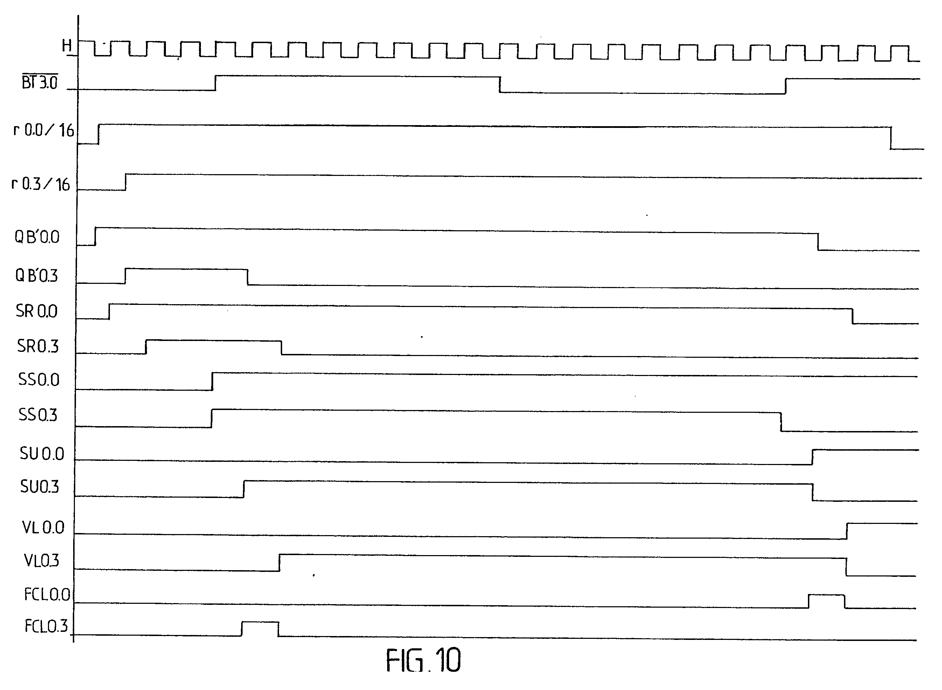

Pour décrire le fonctionnement du circuit de la Fig. 7, on considéra, en particulier, le fonctionnement du circuit de lecture et de validation CLV0 en se référant aux diagrammes de la Fig. 10 qui représentent des signaux qui sont produits dans ce circuit CLV0.

A la Fig. 10, les deux premiers diagrammes montrent le signal H qui sert à synchroniser les signaux de sortie des buffers BUF1, BUF3 et BUF4, et le signal $\overline{BT3.0}$ qui sert à synchroniser le buffer BUF2, ce signal $\overline{BT3.0}$ étant fourni par le registre REG3, Fig. 8.

Toujours, à la Fig. 10, les deux diagrammes suivants montrent les deux signaux r0.0/16 et r0.3/16 délivrés par les deux diviseurs correspondants DIV et appliqués aux entrées d'horloge des bascules B'0.0 et B'0.3. Les passages à "1" de ces signaux, correspondant à des débordements des diviseurs par seize, impliquent que les entrées r0.0 et r0.3 sont ou ont été au niveau "1" pendant seize temps d'octets au rythme de transmission des sorties S0.0 et S0.3.

Les deux diagrammes suivants montrent les signaux de sortie QB'0.0 et QB'0.3 des bascules B'0.0 et B'0.3. Pour la suite de la description, on supposera que les files de commande FC0.0 et FC0.3 ne sont pas vides, tandis que les files FC0.1 et FC0.2 sont vides. Il en résulte que les signaux QB'0.0 et QB'0.3 sont présents sur les sorties des portes P'0.0 et P'0.3 et sont donc appliqués aux entrées correspondantes du buffer BUF1. Par contre, les portes P'0.1 et P'0.2 sont bloquées et ont leurs sorties au niveau bas.

On remarque les signaux QB'0.0 et QB'0.3 ne sont pas en phase avec l'horloge H. Par contre, après passage dans le buffer BUF1, les signaux SR0.0 et SR0.3, illustrés par les diagrammes suivants, sont en phase avec l'horloge H, le premier précédent le second. Ces signaux sont appliqués au buffer BUF2 qui délivrent les deux signaux SS0.0 et SS0.3, illustrés aux deux diagrammes suivants. Les signaux SS0.0 et SS0.3 sont tous deux en phase avec le signal BT3.0.

Les deux diagrammes suivants montrent les signaux SU0.0 et SU0.3 délivrés par le buffer BUF3, après choix dans le circuit de priorité PRI. Il apparaît que le circuit PRI a choisi de laisser passer le signal SS0.3, c'est-à-dire de servir la file de sortie FS0.3. Le signal SS0.0 reste en mémoire dans le buffer BUF2. Le signal SU0.3 est, dans le buffer BUF3, décalé d'une période d'horloge par rapport au signal SS0.3.

Le signal SU0.3 passe dans le buffer BUF4 qui délivre, une période d'horloge plus tard, le signal VL0.3. Par ailleurs, les signaux SU0.3 et VL0.3 rendent la porte P''0.3 passante pendant la période d'horloge qui suit le passage au niveau haut du signal SU0.3. La porte P''0.3 délivre alors le signal de commande de lecture FCL0.3 de la file de commande FC0.3. Par ailleurs, elle remet à zéro la bascule B'0.3. C'est pourquoi, le signal SR0.3 repasse au niveau bas dès la fin du signal FCL0.3. Les quatre derniers diagrammes de la Fig. 10 montrent respectivement les signaux VL0.0, VL0.3, FCL0.0 et FCL0.3.

En revenant au signal SU0.0, il apparaît qu'au prochain passage du signal $\overline{BT3.0}$ à l'état haut, le circuit PRI a choisi de laisser passer le signal SS0.0. La suite du fonctionnement est semblable à celui qui vient d'être décrit en relation avec le signal SU0.3. Au moment où le signal SU0.0 passe à l'état haut, le signal SU0.3 passe à l'état bas et, une période d'horloge plus tard, le signal VL0.3 passe aussi à l'état bas. Ainsi, le signal VL0.3 a duré le temps d'une période du signal $\overline{BT3.0}$.

Le fonctionnement qui vient d'être décrit est suffisant pour permettre à l'homme de métier d'en déduire le fonctionnement du circuit de la Fig. 7 dans le cas où trois des quatre signaux QB'0.0 à QB'0.3 sont ensemble à l'état haut. Le circuit de priorité PRI peut, par exemple, choisir, avec décalage circulaire, les files de sortie qui demandent un paquet. Il peut aussi être conçu pour privilégier une file de sortie quand elle est demande, mais, dans ce cas, cette file de sortie ne recevra pas deux paquets consécutivement, une autre file de sortie sera servie entre les deux paquets.

## Revendications

1. Système de commutation de multiplex à intervalles de temps contenant des paquets de longueur fixe provenant d'une pluralité de n jonctions entrantes (E0 à E15) vers une pluralité de jonctions sortantes ayant des débits inférieurs aux débits des jonctions entrantes, chaque paquet entrant comportant un en-tête, le système comprenant:
   - des premiers moyens de conversion transformant les paquets série d'une pluralité de multiplex entrants, en paquets parallèles,
   - des moyens pour transmettre, aux entrées d'adresse d'une mémoire de commande, programmable à accès aléatoire (MC), l'en-tête et l'identification de la jonction entrante d'origine de chaque paquet entrant, la sortie de données de ladite mémoire de commande délivrant un nouvel en-tête traduit affecté au paquet entrant parallèle en substitution de l'en-tête d'origine de manière à former, avec les mots restants du paquet entrant, le paquet parallèle sortant,
   - une mémoire tampon (MM) activée cycliquement en écriture, pour mémoriser les paquets sortants,
   - des seconds moyens de conversion transformant chaque paquet parallèle sortant, lu dans la mémoire tampon, en un paquet série affecté au(x) multiplex destinataire(s),
   caractérisé en ce que les jonctions sortantes sont groupées en n groupes de jonctions sortantes (S0.0 à S0.p: S1.0 à S1.p; ... ; S15.0 à S15.p), chaque groupe comprenant au plus p jonctions sortantes, et en ce qu'il comporte encore:
   - une pluralité de moyens (FC0.0 à FC0.p; FC1.0 à FC1.p; ... ; FC15.0 à FC15.p) pour mémoriser les adresses des paquets qui sont présents dans la mémoire tampon (MM), lesdits moyens (FC0.0 à FC15.p) étant validés sélectivement en écriture, en fonction d'une information fournie également par d'autres sorties de données de la mémoire de commande (MC), chacun des moyens de mémorisation étant affecté de manière univoque à une jonction sortante, lesdits moyens de mémorisation étant groupés en groupes de la même manière que les jonctions sortantes,
   - des moyens sensibles à un signal indiquant l'activation d'une quelconque des jonctions sortantes pour lire l'adresse contenue dans le moyen de mémorisation correspondant, de manière à retrouver, dans la mémoire tampon, le paquet sortant destiné à ladite jonction, et
   - un circuit d'activation et de validation (CAV) comportant des moyens pour sélecter successivement et cycliquement chaque groupe de jonctions sortantes et, à chaque sélection, activer dans le groupe sélecté une jonction sortante, et, en série sur chaque jonction sortante, une file tampon capable de mémoriser un paquet entier.

2. Système de commutation suivant la revendication 1, caractérisé en ce qu'il comporte encore des moyens pour, à chaque sélection, dans chaque groupe sélecté, activer successivement et cycliquement les jonctions sortantes.

3. Système de commutation suivant la revendication 1, caractérisé en ce qu'il comporte encore des moyens pour, à chaque sélection, dans chaque groupe, activer une parmi les jonctions sortantes requérant la réception d'un paquet.

4. Système de commutation suivant la revendication 2, caractérisé en ce que les moyens pour, à chaque sélection d'un groupe, activer dans ce groupe une jonction sortante comprennent un générateur (REG2) de temps de lecture (FCL15.p, FCL14.p, FCL13.p, ..., FCL0.p, FCL15.(p-1), FCL14.(p-1), ..., FCL15.0, FCL14.0, ..., FCL0.0) desdits moyens de mémorisation des adresses de paquets (FC15.p, FC14.p, ..., FC0.p, ..., FC0.0), les fils d'état non vide desdits moyens de mémorisation étant, selon le rang des jonctions sortantes dans un groupe, reliés aux entrées correspondantes d'autant de multiplexeurs (MKS0 à MKSp) que de jonctions sortantes par groupe, chaque multiplexeur ayant n entrées d'information et une entrée de commande de sélection de groupe, la sortie de chaque multiplexeur étant validée pendant un temps égal au temps de transmission d'un paquet et servant à définir le temps de validation d'écriture d'une file tampon (FS0.0 à FS15.p) d'une fonction de sortie, le début du signal de validation coïncidant avec le signal de sélection du groupe auquel appartient la jonction sortante concernée.

5. Système de commutation suivant la revendication 3, caractérisé en ce que les moyens pour, à chaque sélection d'un groupe, activer dans ce groupe une jonction sortante, comprennent un générateur de temps de synchronisation (BTi) décalés d'un temps bit d'un groupe au suivant, des moyens pour transmettre les signaux de demande de paquets par les jonctions sortantes, les demandes des jonctions sortantes d'un groupe étant synchronisées par ledit temps de synchronisation, puis l'une d'elles étant choisie suivant un processus prioritaire pour être servie à la sélection suivante du groupe.

6. Système de commutation suivant la revendication 5, caractérisé en ce que les demandes de paquets par les jonctions sortantes ne sont validées que si le moyen de mémorisation d'adresse de paquet correspondant n'est pas vide.

7. Système de commutation suivant la revendication 5 ou 6, caractérisé en ce que la demande d'une jonction sortante en cours de réception de paquet n'est pas servie à la sélection immédiatement suivante du groupe.

**Claims**

1. A multiple switching system with time intervals containing packets of fixed length originating from a plurality of n incoming junctions (E0 to E15) towards a plurality of outgoing junctions having outputs lower than the outputs of the incoming junctions each incoming packet comprising a heading, the system comprising:
   - first conversion means transforming the packet series of a plurality of incoming multiplexes into parallel packets,
   - means for transmitting to the address inputs of a control memory programmable to aleatory access (MC), the heading and identification of the incoming junction of origin of each incoming packet, the data output of the said control memory delivering a new explained heading assigned to the parallel incoming packet in substitution for the original heading so as to form, with the remaining words of the incoming packet, the outgoing parallel packet,
   - a buffer memory (MM) activated cyclically in writing in order to memorize the outgoing packets,
   - second conversion means transforming each parallel outgoing packet read in the buffer memory into a series packet assigned to the addressee multiplex(es), characterised in that the outgoing junctions are grouped in n groups of outgoing junctions (S0.0 to S0.p; S1.p; ..., S15.0 to S15.p), each group comprising at the most p junctions and in that it also comprises:
   - a plurality of means (FC0.0 to FC0.p; FC1.0 to FC1.p; ..., FC15.0 to FC15.p) in order to memorize the addresses of the packets which are present in the buffer memory (MM), the said means (FC0.0 to FC15.p) being validated selectively in writing according to an information supplied likewise by other data outputs of the control memory (MC) each of the memorization means being allocated in univocal manner to an outgoing junction, the said memorization means being grouped in groups in the same way as the outgoing junctions.
   - means sensitive to a signal indicating the activation of any one of the outgoing junctions in order to read the address contained in the corresponding memorization means so as to find again, in the buffer memory the outgoing packet intended for the said junction and
   - an activation and validation circuit (CAV) comprising means for selecting successively and cyclically each group of outgoing junctions and a each selection, to activate in the group selected an outgoing junction and in series on each outgoing junction a buffer file capable of memorizing an entire packet.

2. A switching system according to claim 1, characterised in that it comprises also means for, at each selection, in each group selected, activating successively and cyclically the outgoing junctions.

3. A switching system according to claim 1, characterised in that it comprises also means for, at each selection, in each group, activating one among the outgoing junctions requiring the receiving of a packet.

4. A switching system according to claim 2, characterised in that the means for, on each selection of a group, activating in this group an outgoing junction comprising a generator (REG2) of reading time (FCL15.p, FCL14.p, FCL13.p, ..., FCL0.p, FCL15.(p-1), FCL14.(p-1), ..., FCL15.0, FCL14.0, ..., FCL0.0) the said means for memorization of the addresses of packets (FC15.p, FC14.p, ..., FC0.p, ..., (FC0.0), the non occupied state wires of the said memorization means being according to the row of outgoing junctions in a group, connected to the corresponding inputs as many multiplexers (MKS0 to MKSp) as outgoing junctions per group, each multiplexer having information inputs and a group selection control input, the output of each multiplexer being validated during a time equal to the transmission time of a packet and serving to define the writing validation time of a buffer file (FS0.0 to FS15.p) of an output function, the output of the validation signal coinciding with the selection signal of the group to which the outgoing junction concerned belongs.

5. A switching system according to claim 3, characterised in that the means for, on each selection of a group, activating in this group an outgoing junction comprising a synchronization time generator ($\overline{BTi}$) shifted by a bit time of a following group, means for transmitting the control signals of packets by the outgoing junctions, the requests of the outgoing junctions of a group being synchronized by the said synchronization time then one of them being chosen according to a priority process in order to be served at the following selection of a group.

6. A switching system according to claim 5, characterised in that the packet requests by the outgoing junctions are only validated if the memorization means of corresponding packet address is not unoccupied.

7. A switching system according to claim 5 or 6, characterised in that the request of an outgoing junction in course of packet receiving is not served at the selection immediately following the group.

## Patentansprüche

1. System zur Kommutierung von Zeitmultiplexen, die Pakete fester Länge enthalten, welche aus einer Vielzahl von n ankommenden Verbindungen (E0 bis E15) stammen, auf eine Vielzahl abgehender Verbindungen, deren Durchsatzleistungen geringer als die Durchsatzleistungen der ankommenden Verbindungen sind, wobei jedes ankommende Paket einen Kopf hat und das System folgendes aufweist:
   - eine erste Umsetzeinrichtung , welche Serienpakete einer Vielzahl der ankommenden Multiplexe in Parallelpakete umsetzt,
   - eine Einrichtung, um für jedes ankommende Paket den betreffenden Kopf und die Kennung derjenigen ankommenden Verbindung, die Ursprung des betreffenden Paketes ist, an Adresseneingänge eines Befehlsspeichers (MC) zu übertragen, der in wahlfreiem Zugriff programmierbar ist und dessen Datenausgang einen neuen übersetzten Kopf liefert, welcher dem ankommenden Parallelpaket anstelle des ursprünglichen Kopfes zugeordnet ist, derart, daß mit den bleibenden Wörtern des ankommenden Paketes das ausgangsseitige Parallelpaket gebildet wird,
   - einen Pufferspeicher (MM), der zyklisch beim Einschreiben aktivierbar ist, um die abgehenden Pakete zu speichern,
   - eine zweite Umsetzeinrichtung, die jedes abgehende im Pufferspeicher gelesene Parallelpaket in ein Serienpaket umsetzt, das dem (den) Bestimmungsmultiplex-(en) zugeordnet ist,
   dadurch gekennzeichnet, daß die abgehenden Verbindungen in n Gruppen von abgehenden Verbindungen (S0.0 bis S0.p; S1.0 bis S1.p; ...; S15.0 bis S15.p) aufgeteilt sind, wobei jede Gruppe höchstens p abgehende Verbindungen enthält, und daß weiterhin vorgesehen ist:
   - eine Vielzahl von Einrichtungen (FC0.0 bis FC0.p; FC1.0 bis FC1.p; ... ; FC15.0 bis FC15.p) zum Speichern der Adressen der im Pufferspeicher (MM) vorhandenen Pakete, wobei diese Einrichtungen (FC0.0 bis FC15.p) abhängig von einer Information, die gleichermaßen von anderen Datenausgängen des Befehlsspeichers (MC) geliefert wird, selektiv im Schreiben gültig gemacht werden und wobei jede der Speichereinrichtungen in eindeutiger Weise einer abgehenden Verbindung zugeordnet ist und die besagten Speichereinrichtungen in der gleichen Weise wie die abgehenden Verbindungen in Gruppen aufgeteilt sind,
   - eine Einrichtung, die auf ein die Aktivierung irgendeines beliebigen Exemplars der abgehenden Verbindungen anzeigendes Signal anspricht, um die in der entsprechenden Speichereinrichtung enthaltene Adresse zu lesen, derart, daß im Pufferspeicher das für die betreffende abgehende Verbindung bestimmte abgehende Paket wiedergefunden wird, und

- eine Aktivierungs- und Gültigmachungsschaltung (CAV), die Mittel enthält, um nacheinander und zyklisch jede Gruppe der abgehenden Verbindungen auszuwählen und, bei jeder Wahl, in der gewählten Gruppe eine abgehende Verbindung und, in Serie auf jeder abgehenden Verbindung, ein Pufferregister zu aktivieren, das ein ganzes Paket speichern kann.

2. Kommutierungssystem nach Patentanspruch 1, dadurch gekennzeichnet, daß es ferner Mittel enthält, um bei jeder Wahl, in jeder gewählten Gruppe, die abgehenden Verbindungen nacheinander und zyklisch zu aktivieren.

3. Kommutierungssystem nach Patentanspruch 1, dadurch gekennzeichnet, daß es ferner Mittel enthält, um bei jeder Wahl, in jeder Gruppe, eine unter den abgehenden Verbindungen zu aktivieren, welche den Empfang eines Paketes verlangt.

4. Kommutierungssystem nach Patentanspruch 2, dadurch gekennzeichnet, daß die Mittel, welche bei jeder Wahl einer Gruppe eine abgehende Verbindung in dieser Gruppe aktivieren, einen Zeitgenerator (REG2) für das Lesen (FCL15.p, FCL14.p, FCL13.p, ..., FCL0.p, FCL15.(p-1), FCL14.(p-1), ..., FCL15.0, FCL14.0, ..., FCL0.0) der Adressen der Pakete (FC15.p, FC14.p, ..., FC0.p, ..., FC0.0) aus den besagten Speichereinrichtungen enthalten, wobei die Leitungen des nicht unbelegten Zustandes der Speichereinrichtungen entsprechend dem Rang der abgehenden Verbindungen in einer Gruppe, mit entsprechenden Eingängen so vieler Multiplexer (MKS0 bis MKSp) verbunden sind wie abgehende Verbindungen pro Gruppe vorhanden sind, und wobei jeder Multiplexer Informationseingänge und einen Steuereingang für die Wahl der Gruppe hat und der Ausgang jedes Multiplexers während einer Zeit gültig gemacht wird, die gleich der Übertragungszeit für ein Paket ist und dazu dient, die Schreibgültigkeitszeit eines Pufferregisters (FS0.0 bis FS15.p) einer Ausgangsfunktion zu definieren, und wobei der Beginn des Gültigkeitssignals mit dem Signal der Wahl derjenigen Gruppe zusammenfällt, zu welcher die betreffende abgehende Verbindung gehört.

5. Kommutierungssystem nach Patentanspruch 3, dadurch gekennzeichnet, daß die Mittel, welche bei jeder Wahl einer Gruppe eine abgehende Verbindung in dieser Gruppe aktivieren, einen Generator für Synchronisierzeiten (BTi) enthalten, die um eine Bitzeit von einer Gruppe zur nächsten verschoben sind, und Mittel zum Übertragen von Signalen für die Anfrage nach Paketen durch die abgehenden Verbindungen, wobei die Anfragen der abgehenden Verbindungen einer Gruppe durch die besagten Synchronisierzeiten synchronisiert sind, worauf eine von ihnen entsprechend einem Prioritätsprozess ausgewählt wird, um bei der nachfolgenden Wahl der Gruppe bedient zu werden.

6. Kommutierungssystem nach Patentanspruch 5, dadurch gekennzeichnet, daß die Anfragen nach Paketen durch die abgehenden Verbindungen nur dann gültig werden, wenn die entsprechende Paketadressen-Speichereinrichtung nicht unbelegt ist.

7. Kommutierungssystem nach Patentanspruch 5 oder 6, dadurch gekennzeichnet, daß die Anfrage einer abgehenden Verbindung im Lauf des Empfangs eines Paketes nicht bei der unmittelbar folgenden Wahl der Gruppe bedient wird.

FIG.1

FIG.2

FIG.3

EP 0 270 471 B1

FIG. 4

FIG.5

FIG. 6

FIG.7

FIG. 8

FIG.9

FIG. 10